# EUROPEAN PATENT SPECIFICATION

(11) **EP 1 670 112 B1**
(45) Date of publication and mention of the grant of the patent: **12.03.2008**
(21) Application number: 05077839.8
(22) Date of filing: 09.12.2005
(51) Int. Cl.: H02G 3/12

(54) **Flush mounted electrical box**
Elektro-Einbaudose
Boîte électrique à encastrer

(30) Priority: 10.12.2004 NL 1027704
(43) Date of publication of application: 14.06.2006
(73) Proprietor: ABB B.V., 3068 AV Rotterdam (NL)
(72) Inventor: Renckens, Thomas Philippus, 3742 ND Baarn (NL)
(74) Representative: Ferguson, Alexander

(56) References cited:
- EP-A- 1 003 260
- DE-A- 2 802 893
- US-A- 5 142 102

## Description

The invention relates to a box for electric wirings.

A box according to the preamble of claim 1 is known from DE-A-2802893.

Such a box may for instance be a so-called flush-type box, which is placed in a hole made in a wall and connecting to a slot for the conduit pipe slotted or sawn into the wall in question. In newly built houses such boxes and conduit pipes are placed into the wall before it is usually finished with a coat of plaster.

The type of box used among others depends on the type of switching material the box should contain and the thickness of the wall in question (thick bearing wall, or thin partition wall). These conditions determine what depth the box to be used should have. When wiring, boxes having various depths suitable for the locations in question need to be on hand in the right quantities. If it turns out that a box cannot after all be used at a certain location in a certain wall or that a box of another depth is indeed necessary at that location, a box having another depth will have to be used. These things will have to be anticipated, in which case more boxes than strictly necessary need to be brought along. Alternatively another box will have to be picked up from a place of storage, which will mean an interruption of a smooth, systematic continuation of the activities.

Another drawback is that it is necessary to determine beforehand what box depths are necessary, and to order those boxes from the wholesalers/manufacturer. Those companies have to stock them or make production facilities available for them, respectively.

Another problem may occur when the hole for the box is not deep enough. In that case as well the box on hand will have to be changed for another less deep box.

It is an object of the invention to improve on this.

From one aspect the invention provides a box for electric wirings, as described in claim 1.

The box according to the invention has an initial depth and can easily be given another depth, in order to be thus adapted to the actual wall thickness, hole deepness and/or interior work to be incorporated. The box thus has several (potential) depths. The electrical fitter may judge in situ what box depth is necessary, and subsequently take measures by changing the depth of the box. When ordering the boxes the user does not need to make a choice as regards box depths yet. A stock of boxes of different depths need not be held either. In a simple embodiment the circumferential wall and the bottom wall have been formed as one unity with each other and they comprise a deformable portion, which deformable portion can be changed between a first in itself stable condition for the first position of the bottom portion and at least one in itself stable second condition for the at least one second position of the bottom portion.

Preferably the bottom portion is connected to the remaining part of the box by means of a hinge connection, so that the electrical fitter can easily change the total height, if necessary.

In an easy to manufacture embodiment the hinge connection is formed in the material of the bottom, preferably by folding lines in the material of the box.

Moving the bottom portion is facilitated when the hinge connection is formed by a strip of material of the box that is situated between folding lines.

An enlargement of the content of the box can be enhanced if the bottom portion is situated concentric to the circumferential wall. In that case the bottom portion in a direction transverse to the circumferential wall is preferably situated at a short distance from the first edge, so that the enlargement can be as large as possible, considering the profile of the interior to be placed.

The first and the second edge can be spaced apart at a fixed distance from each other.

The bottom portion may be movable between a first position and at least one second position in which the bottom portion is situated at a different distance from the first edge than in the first position.

Thus, the invention provides a box for electric wirings, comprising a wall having a circumferential wall and a bottom wall connecting to a first edge of the circumferential wall, wherein the depth of the box defined by the bottom wall is adjustable between at least two different depths.

The depth of the box can be adjustable by a turning motion of a portion of the wall of the box. For that purpose the box may have a turnable portion in the transition between circumferential wall and bottom wall.

The said movable bottom portion may in one embodiment extend over nearly the entire bottom.

In one embodiment the box is designed like a flush-type box.

It is noted that from German patent application 28 02 893 a box for electric wirings is known, of which the circumferential wall is provided with a bellows-shaped portion, by means of which the position of the bottom and the circumferential wall portion between bottom a bellows-shaped portion can be adjusted to the depth of a hole in a wall, under the influence of support forces of the hole bottom.

It is furthermore noted that from European patent application 1.003.260 a two-part box is known, wherein a circumferential wall is provided with a bellows-shaped portion and a mounting sleeve to be inserted into the bellows-shaped portion is provided with external teeth for securing a position of the bellows-shaped portion and thus the depth of the assembly of the box including mounting sleeve.

The invention will be elucidated on the basis of a number of exemplary embodiments shown in the attached drawings, in which:
Figure 1 shows an isometric view diagonally from above of an exemplary embodiment of a box according to the invention;
Figure 2 shows an isometric view diagonally from underneath of the box of figure 1;
Figure 2A shows a bottom view of the box of figure 1;
Figure 3 shows the box of figure 1, in a condition in which it is placed in a wall;
Figure 4 shows an isometric view diagonally from underneath of the box of figures 1 and 2, with extended bottom; and
Figure 5 shows the box of figure 4, in a condition in which it is placed in a wall.

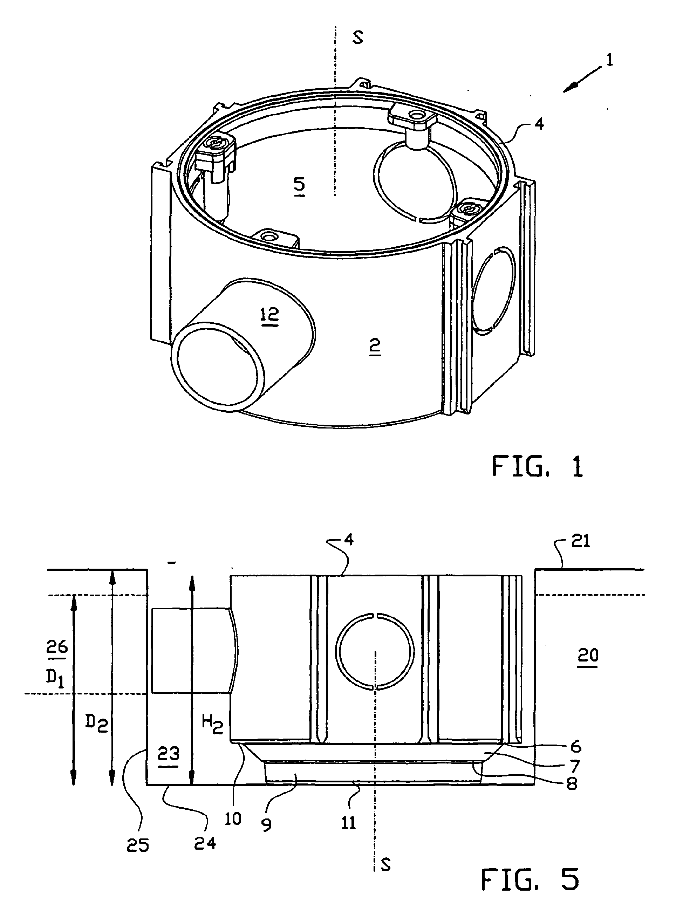

The box 1 shown in the figures 1-5 is designed like a flush-type box, for instance made of polypropylene, and has a circle-cylindrical circumferential wall 2 having centre line S and a bottom wall 3 that has been formed as one unity with the circumferential wall 2. At the side facing away from the bottom 3 a circular opening 4 is left open, through which the interior for the flush-type box 1 can be inserted into the inside 5 of the box 1.

A spout 12 extends outward from the circumferential wall 2, for connection to a wiring pipe.

The bottom 3 has a small circumferential edge area 10 at the location of the connection to the circumferential wall 2, which area in radial inward direction via a circular folding line 6 changes into a circular circumferential strip 7, which at its radial inward edge via circular folding line 8 changes into a circular circumferential strip 9. The circumferential strip 9 surrounds a bottom plate 11 that is solidly connected thereto and is substantially perpendicular to said bottom plate.

The folding lines 6 and 8 are concentric to the centre line S. The folding lines 6 and 8 are formed by weakenings in the material at that location, such as for instance a living hinge. The folding lines 6 and 8 are situated as close to the edge 10 as possible, in order to let the extendable portion of the bottom 3 be as large as possible.

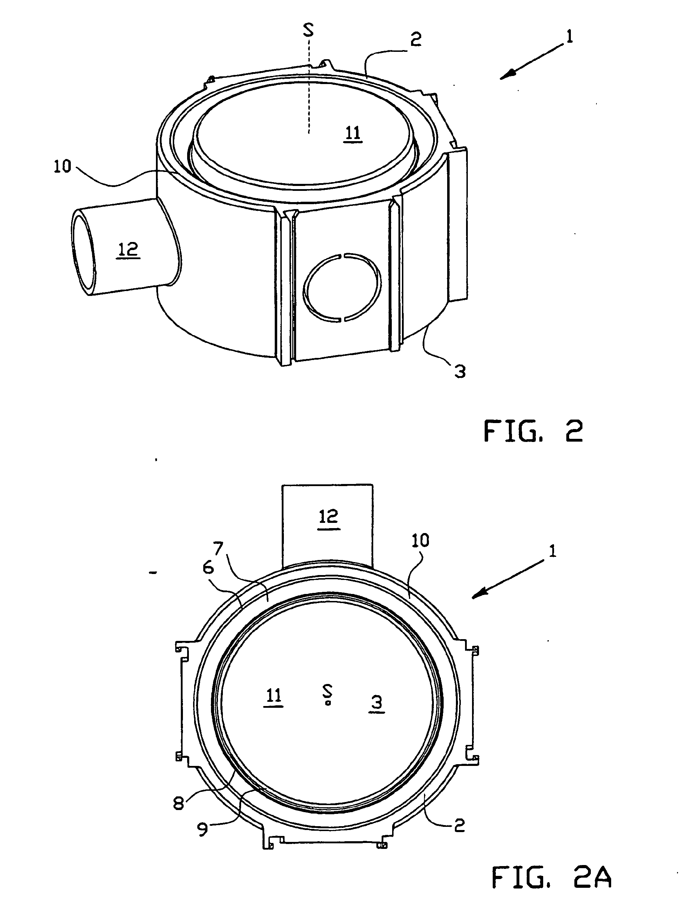

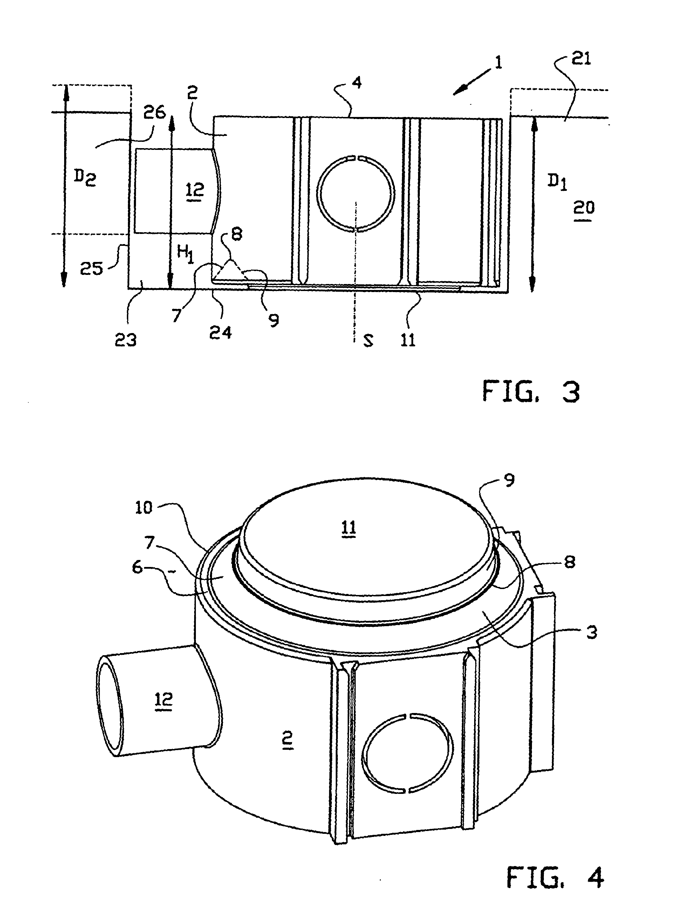

In the stable condition shown in figure 2, the bottom portion with circumferential strip 9 and bottom plate 11 is situated relatively inward, wherein the surface of the bottom plate 11 only slightly projects from the circumferential edge 10 of the bottom 3. In that condition, shown in figure 3, the box 1 has a depth H 1. The circumferential strip 7 in that case extends from the circumferential edge 10 inward into the inside 5 of the box 1.

In this example the box 1 with the depth H1 is suitable to be placed in the hole 23 in the wall 20 shown in figure 3. The box 1 can in that case be placed with its bottom plate 11 against the bottom surface 24 of the hole 23, and as H1 is slightly smaller than the depth D1 of the hole 23 the edge of the opening 4 remains within the surface 21 of the wall 20.

It is furthermore shown that in the wall 20, starting from the wall portion 25 of the hole 23, a slot 26 is present for a wiring pipe, which can be connected to the spout 12.

If the depth of the hole 23 would be larger, for instance D2, as indicated in dashed lines in figure 3, said hole would be suitable for accommodation of a box having a larger content, for instance for accommodating other switch material. The content of the box according to the invention can easily be enlarged, by pressing on the bottom plate 11 from the inside so that the circumferential strip 7 is folded to the outside about folding line 6, wherein circumferential strip 7 tilts about folding line 8 with respect to circumferential strip 9, while passing through a plane parallel to the bottom, and the bottom 3 will take up the stable position shown in figure 5. In that case both the circumferential strip 7 and the circumferential strip 9 will extend downward from the edge 10, in order to enlarge the box depth from H1 to H2. With that depth the flush-type box 1 fits more properly in the hole 23 which has a depth D2.

On the other hand, in case of a flush-type box 1 having an enlarged depth H2, shown in figure 5, which has to be placed in a hole 23 having a depth D1, shown in dashed lines in figure 5, the depth can easily be reduced to H1, by pressing on the bottom plate 11, so that the bottom 3 by folding in changes from the position shown in figure 4 to the condition shown in figure 2.

## Claims

1. Box (1) for electric wirings, comprising a circumferential wall (2) and a bottom wall (3) connecting to a first edge (10) of the circumferential wall and formed as one unity with the circumferential wall, which form a chamber (5) for a contact- or switch unit for the electric wiring, wherein the circumferential wall defines an opening at a second edge (4) opposite to the first edge, which opening is intended to be facing a living quarter after having been installed, wherein the box is furthermore provided with a passage for passing electric wires through to the chamber, and where the bottom is at least partially (11) extendable and/or retractable in a direction perpendicular to the bottom **characterised in that** the extend and the retracted position of the bottom is in itself stable.

2. Box according to claim 1, wherein the bottom is at least partially extendable and/or retractable with respect to the first edge (10).

3. Box according to claim 1 or 2, wherein the depth of the box (1) is adjustable by a turning motion of a portion (7) of the wall of the box.

4. Box according to claim 3, wherein the box has a turnable portion (7) in the transition between circumferential wall and bottom wall.

5. Box according to any one of the preceding claims, wherein the bottom comprises at least one bottom portion (11) that is movable between a first position and at least one second position in which the bottom portion is situated at a different distance from the second edge than in the first position, wherein the circumferential wall (2) and the bottom wall (3) comprise a deformable portion (6-8), which deformable portion can be changed between a first in itself stable condition for the first position of the bottom portion and at least one in itself stable second condition for the at least one second position of the bottom portion (11).

6. Box according to claim 5, wherein the bottom portion (11) is connected to the remaining part of the box by means of a hinge connection (6-8).

7. Box according to claim 6, wherein the hinge connection (6-8) is formed in the material of the bottom.

8. Box according to claim 6 or 7, wherein the hinge connection is formed by folding lines (6, 8) in the material of the box (1).

9. Box according to claim 8, wherein the hinge connection is formed by a strip of material (7) of the box that is situated between folding lines (6, 8).

10. Box according to any one of the claims 5-9, wherein the bottom portion (11) is situated concentric to the circumferential wall (2), wherein preferably the bottom portion in a direction transverse to the circumferential wall is situated at a short distance from the first edge (10).

11. Box according to any one of the claims 5-10, wherein the first (10) and the second (4) edge are spaced apart at a fixed distance from each other.

12. Box according to any one of the claims 5-11, wherein the bottom portion (11) is movable between a first position and at least one second position in which the bottom portion is situated at a different distance from the first edge (10) than in the first position.

13. Box according to any one of the claims 5-12, wherein the said movable bottom portion (11) extends over nearly the entire bottom.

14. Box (1) according to any one of the preceding claims, designed like a flush-type box.

## Patentansprüche

1. Dose (1) für elektrische Verkabelung, umfassend eine Umfangswand (2) und eine Bodenwand (3), anschließend an einen ersten Rand (10) der Umfangswand und als eine Einheit mit der Umfangswand gebildet, welche eine Kammer (5) für eine Kontakt- oder Schalteinheit für die elektrische Verkabelung bilden; wobei die Umfangswand eine Öffnung an einem zweiten Rand (4) gegenüber dem ersten Rand bildet, wobei die Öffnung dazu ausgelegt ist, nach dem Montieren zu einem Wohnraum zu weisen, wobei die Dose ferner mit einem Durchlass zum Durchführen von elektrischen Kabeln zu der Kammer versehen ist, und wobei der Boden wenigstens teilweise (11) in einer Richtung orthogonal zum Boden erweiterbar und/oder einziehbar ist, **dadurch gekennzeichnet, dass** die erweiterbare und die einziehbare Stellung des Bodens in sich stabil sind.

2. Dose nach Anspruch 1, wobei der Boden bezüglich des ersten Rands (10) wenigstens teilweise erweiterbar und/oder einziehbar ist.

3. Dose nach Anspruch 1 oder 2, wobei die Tiefe der Dose (1) durch eine Drehbewegung eines Teils (7) der Wand der Dose einstellbar ist.

4. Dose nach Anspruch 3, wobei die Dose einen drehbaren Teil (7) im Übergang zwischen der Umfangswand und der Bodenwand umfasst.

5. Dose nach einem der vorangehenden Ansprüche, wobei der Boden wenigstens einen Bodenteil (11) umfasst, der zwischen einer ersten Stellung und wenigstens einer zweiten Stellung, in der der Bodenteil in einem anderen Abstand zu dem zweiten Rand als in der ersten Stellung angeordnet ist, beweglich ist, wobei die Umfangswand (2) und die Bodenwand (3) einen verformbaren Abschnitt (6-8) umfassen, wobei der verformbare Abschnitt zwischen einem ersten in sich stabilen Zustand für die erste Stellung des Bodenteils und wenigstens einem zweiten in sich stabilen Zustand für die wenigstens eine zweite Stellung des Bodenteils (11) verändert werden kann.

6. Dose nach Anspruch 5, wobei der Bodenteil (11) mit dem restlichen Teil der Dose mittels einer Gelenkverbindung (6-8) verbunden ist.

7. Dose nach Anspruch 6, wobei die Gelenkverbindung (6-8) in dem Bodenmaterial gebildet ist.

8. Dose nach Anspruch 6 oder 7, wobei die Gelenkverbindung durch Falzlinien (6, 8) in dem Material der Dose (1) gebildet ist.

9. Dose nach Anspruch 8, wobei die Gelenkverbindung durch einen Streifen eines Materials (7) der Dose gebildet ist, der zwischen Falzlinien (6, 8) angeordnet ist.

10. Dose nach einem der Ansprüche 5-9, wobei der Bodenteil (11) konzentrisch zu der Umfangswand (2) angeordnet ist, wobei der Bodenteil vorzugsweise in einer Querrichtung zur Umfangswand in einem geringen Abstand zu dem ersten Rand (10) angeordnet ist.

11. Dose nach einem der Ansprüche 5-10, wobei der erste (10) und der zweite (4) Rand in einem festen Abstand zueinander beabstandet sind.

12. Dose nach einem der Ansprüche 5-11, wobei der Bodenteil (11) zwischen einer ersten Stellung und wenigstens einer zweiten Stellung, in der der Bodenteil in einem anderen Abstand zu dem ersten Rand (10) als in der ersten Stellung angeordnet ist, beweglich ist.

13. Dose nach einem der Ansprüche 5-12, wobei sich der bewegliche Bodenteil (11) über fast den ganzen Boden erstreckt.

14. Dose nach einem der vorangehenden Ansprüche, welche wie eine Dose vom Unterputztyp ausgebildet ist.

## Revendications

1. Boîte (1) pour câblages électriques, comprenant une paroi circonférentielle (2) et une paroi inférieure (3) connectée à un premier bord (10) de la paroi circonférentielle et formée de manière unitaire avec la paroi circonférentielle, lesquelles forment une chambre (5) pour une unité de contact ou de commutation pour le câblage électrique, dans laquelle la paroi circonférentielle définit une ouverture au niveau d'un second bord (4) opposé au premier bord, laquelle ouverture est destinée à être tournée vers un local d'habitation après son installation, dans laquelle la boîte est pourvue en outre d'un passage destiné à faire passer les fils électriques directement jusqu'à la chambre et à l'endroit où le fond peut au moins en partie (11) s'étendre et/ou se rétracter dans une direction perpendiculaire au fond, **caractérisée en ce que** la position étendue et rétractée du fond est en elle-même stable.

2. Boîte selon la revendication 1, dans laquelle le fond peut au moins en partie s'étendre et/ou se rétracter par rapport au premier bord (10).

3. Boîte selon la revendication 1 ou 2, dans laquelle la profondeur de la boîte (1) peut être réglée par un mouvement de rotation d'une partie (7) de la paroi de la boîte.

4. Boîte selon la revendication 3, dans laquelle la boîte présente une partie rotative (7) dans la transition entre la paroi circonférentielle et la paroi inférieure.

5. Boîte selon l'une quelconque des revendications précédentes, dans laquelle le fond comprend au moins une partie inférieure (11) qui est mobile entre une première position et au moins une seconde position dans laquelle la partie inférieure est située à une distance différente du second bord que dans la première position, dans laquelle la paroi circonférentielle (2) et la paroi inférieure (3) comprennent une partie déformable (6-8), laquelle partie déformable peut passer entre un premier état stable en lui-même pour la première position de la partie inférieure et au moins un second état stable en lui-même pour la au moins une seconde position de la partie inférieure (11).

6. Boîte selon la revendication 5, dans laquelle la partie inférieure (11) est connectée à la partie restante de la boîte au moyen d'une connexion articulée (6-8).

7. Boîte selon la revendication 6, dans laquelle la connexion articulée (6-8) est formée dans le matériau du fond.

8. Boîte selon la revendication 6 ou 7, dans laquelle la connexion articulée est formée par des lignes de pliage (6, 8) dans le matériau de la boîte (1).

9. Boîte selon la revendication 8, dans laquelle la connexion articulée est formée par une bande de matériau (7) de la boîte qui est située entre les lignes de pliage (6, 8).

10. Boîte selon l'une quelconque des revendications 5 à 9, dans laquelle la partie inférieure (11) est située de manière concentrique par rapport à la paroi circonférentielle (2), dans laquelle de préférence la partie inférieure dans une direction transversale à la paroi circonférentielle n'est pas située loin du premier bord (10).

11. Boîte selon l'une quelconque des revendications 5 à 10, dans laquelle le premier bord (10) et le second bord (4) sont espacés l'un de l'autre à distance fixe l'un de l'autre.

12. Boîte selon l'une quelconque des revendications 5 à 11, dans laquelle la partie inférieure (11) est mobile entre une première position et au moins une seconde position dans laquelle la partie inférieure est située à une distance différente du premier bord (10) que dans la première position.

13. Boîte selon l'une quelconque des revendications 5 à 12, dans laquelle ladite partie inférieure (11) s'étend au-dessus de presque l'ensemble du fond.

14. Boîte (1) selon l'une quelconque des revendications précédentes, conçue comme une boîte du type encastré.
